# EUROPÄISCHE PATENTSCHRIFT

(11) **EP 1 024 322 B1**
(45) Veröffentlichungstag und Bekanntmachung des Hinweises auf die Patenterteilung: **17.08.2005**
(21) Anmeldenummer: 99125881.5
(22) Anmeldetag: 24.12.1999
(51) Int. Cl.: F16L 21/03, F16L 37/02, F16L 21/02

(54) **Steckstück**
Connection sleeve
Manchon de raccord

(30) Priorität: 26.01.1999 DE 19902953
(43) Veröffentlichungstag der Anmeldung: 02.08.2000
(73) Patentinhaber: Carl Freudenberg KG, 69469 Weinheim (DE)
(72) Erfinder: Unger, Hans, 69518 Absteinach (DE); Kramer, Thomas, 64668 Zotzenbach (DE)

(56) Entgegenhaltungen:
- BE-A- 523 106
- DE-A- 3 418 718
- FR-A- 1 448 157
- US-A- 3 458 219
- US-A- 5 002 317

## Beschreibung

### Technisches Gebiet

Die Erfindung betrifft ein Steckstück zur dichten Verbindung von zwei mit axialem Abstand zueinander benachbart angeordneten, rohrförmigen Hohlkörpern, umfassend eine Verbindungshülse aus zähhartem Werkstoff, die zumindest stirnseitig beiderseits von Dichtringen aus elastomerem Werkstoff umschlossen ist, wobei die Dichtringe an die Innenwand der jeweiligen Hohlkörper dichtend anlegbar sind und zumindest ein Dichtring die entsprechende Stirnseite der Verbindungshülse in axialer Richtung mit einem Überstand überragt.

### Stand der Technik

Ein solches Steckstück ist aus der DE 195 48 249 A1 bekannt. Der erste Dichtring weist auf der der entsprechenden Innenwand zugewandten Seite nur eine Dichtfläche auf, die kugelförmige begrenzt ist. Der zweite Dichtring ist auf der der entsprechenden Innenwand zugewandten Seite mit zumindest zwei axial beabstandeten Dichtflächen versehen. Der Überstand, mit dem der Dichtring die Verbindungshülse in axialer Richtung überragt, ist vergleichsweise steif ausgeführt, so daß sich bei Druckänderungen im Steckstück keine Relativbeweglichkeit des Überstands in radialer Richtung bezogen auf die Innenwand und/ oder die Verbindungshülse ergibt. Die Abdichtung erfolgt lediglich über die kugelförmige Oberfläche.

Aus der US-A-5,002,317 ist ein Steckstück der eingangs genannten Art bekannt, welches eine Dichtlippe aufweist, die in radialer Richtung nach außen spitz zuläuft.

BE 523 106 A offenbart ein Steckstück mit einer Dichtlippe, welche eine Dichtfläche aufweist, die parallel zur Innenwand des Hohlkörpers orientiert ist.

### Darstellung der Erfindung

Der Erfindung liegt nunmehr die Aufgabe zugrunde, ein Steckstück der eingangs genannten Art derart weiterzubilden, dass bei problemloser Montage eine einwandfreie Dichtigkeit gewährleistet ist.

Diese Aufgabe wird erfindungsgemäß mit den Merkmalen von Anspruch 1 gelöst. Danach ist ein Steckstück derart ausgestaltet, dass der Überstand als in axialer Richtung sich im Querschnitt verjüngende Dichtlippe ausgebildet ist, die ohne Überdruckbeauschlagung innerhalb des Steckstücks einen Umfangsspalt in radialer Richtung zu der Innenwand des Hohlkörpers bildet und bei Überdruckbeaufschlagung innerhalb des Steckstücks dichtend an die die Stirnseite außenseitig umschließende Innenwand des Hohlkörpers gelegt ist.

Durch den in radialer Richtung elastisch auffederbaren Überstand, der als Dichtlippe ausgebildet ist, werden problemlos Überdrücke innerhalb des Steckstücks bis 60 bar abgedichtet, ohne daß es im Dichtbereich zu Leckagen des abzudichtenden Mediums käme. Die Größe des Anpreßdrucks der Dichtlippe an die Innenwand des Hohlkörpers reguliert sich selbsttätig, in Abhängigkeit vom Überdruck im Inneren des Steckstücks. Das Steckstück gelangt beispielsweise als Teil einer Leitung zur Anwendung, die vom Luftfilter eines Kraftfahrzeugs zum Turbolader geführt wird, wobei die beiden Hohlkörper beispielsweise jeweils aus einer Aluminiumlegierung bestehen.

Die Dichtringe können auf den einander zugwandten Seiten jeweils eine Staublippe aufweisen, die den jeweiligen Dichtlippen mit axialem Abstand benachbart zugeordnet sind. Hierbei ist von Vorteil, daß die jeweiligen Dichtlippen vor einer äußeren Beaufschlagung mit Verunreinigungen geschützt sind. Das Steckstück weist dadurch gleichbleibend gute Gebrauchseigenschaften während einer langen Gebrauchsdauer auf.

Der Überstand kann eine stirnseitige, nutförmige Ausnehmung aufweisen. Die Ausnehmung kann dabei eine in axialer Richtung offene, V-förmige Gestalt aufweisen, wobei die auffederbare Dichtlippe durch die radial äußere Begrenzung der Ausnehmung gebildet ist. Der innerhalb des Steckstücks anliegende Druck wirkt dabei auch innerhalb der nutförmigen Ausnehmung, wobei mit zunehmendem Differenzdruck auch die Dichtlippe verstärkt an den rohrförmigen Hohlkörper dichtend angepreßt wird.

Die Verbindungshülse besteht bevorzugt aus einem metallischen Werkstoff. Hierbei ist von Vorteil, daß der Durchgangsquerschnitt des Steckstücks stets gleichbleibend und von übereinstimmender Größe ist, da eine Verbindungshülse aus einem metallischen Werkstoff auch während einer langen Gebrauchsdauer keine Relaxationserscheinungen aufweist.

Gemäß einer weiteren vorteilhaften Ausgestaltung kann es vorgesehen sein, daß der elastomere Werkstoff die Verbindungshülse außenseitig vollständig umschließt. Der elastomere Werkstoff dient dann als Korrosionsschutz für die Verbindungshülse. Sekundärer Rostschutzmaßnahmen, wie beispielsweise einer Lackierung die in einem zusätzlichen Arbeitsgang aufgebracht werden müßte, bedarf es daher nicht.

Der elastomere Werkstoff und die Verbindungshülse sind bevorzugt adhäsiv miteinander verbunden, beispielsweise vulkanisiert. Hierdurch wird ein absolut dichter Verbund des elastomeren Werkstoffs mit der Verbindungshülse erzielt.

Im Hinblick auf eine einfache und kostengünstige Herstellbarkeit sowie hinsichtlich einer guten Durchströmbarkeit sind die Verbindungshülsen und die Hohlkörper bevorzugt jeweils zylindrisch ausgebildet.

Das Steckstück sollte unabhängig von der Strömungsrichtung des abzudichtenden Mediums gleichbleibend gute Gebrauchseigenschaften aufweisen. Dazu ist es bevorzugt vorgesehen, daß beide Dichtringe axiale Überstände aufweisen und mit Dichtlippen versehen sind, die bei Überdruckbeaufschlagung radial nach außen auffederbar sind. Durch das Auffedern der Dichtlippen und deren Anlage an der Innenwand der Hohlkörper wird die Dichtfläche insgesamt deutlich vergrößert, die spezifische Belastung auf die Dichtringe vergleichmäßigt und Ermüdungserscheinungen während einer langen Gebrauchsdauer dadurch vorgebeugt.

Der Überdruck zur Betätigung der Dichtlippen beträgt bevorzugt etwa 10 bar. Bei relativen Überdrücken innerhalb des Steckstücks von weniger als 10 bar berühren nur die Dichtringe die Innenwände der Hohlkörper unter elastischer Vorspannung dichtend. Für Überdrücke unterhalb von 10 bar reicht eine derartige Abdichtung problemlos aus. Steigt der Innendruck des Steckstücks über 10 bar, legt sich der als Dichtlippe ausgebildete Überstand selbsttätig an die jeweiligen Innenwände der Hohlkörper an und sorgt dadurch für eine verbesserte Abdichtung im Bereich bis zu 60 bar.

Die Dichtringe sind unter elastischer Vorspannung dichtend von den Hohlkörpern umschlossen, wobei das Steckstück unter Vermeidung sekundärer Befestigungsmittel in den Hohlkörpern stirnseitig aufgenommen ist. Beispielsweise sind aufwendig zu montierende Schlauchschellen nicht erforderlich, um das Steckstück zu befestigen. Das Steckstück wird lediglich durch die elastische Vorspannung der Dichtringe in den stirnseitigen Enden der einander benachbarten Hohlkörper gehalten.

### Kurzbeschreibung der Zeichnung

- Figur 1: zeigt ein Ausführungsbeispiel eines Steckstücks, wobei im Inneren des Steckstücks Atmosphärendruck bis etwa 10 bar Druck herrscht.
- Figur 2: zeigt das in Figur 1 gezeigte Steckstück, wobei im Inneren ein relativer Überdruck von mehr als 10 bar herrscht.
- Figur 3: zeigt ein weiteres Ausführungsbeispiel eines Steckstücks im nichteingebauten Zustand, wobei auf der der Atmosphärenseite zugewandten Seite der Dichtringe eine Saublippe angeordnet ist
- Figur 4: zeigt ein Ausführungsbeispiel des erfindungsgemäßen Steckstücks, in dessen elastomerem Werkstoff stirnseitig eine nutförmige Ausnehmung angeordnet ist.

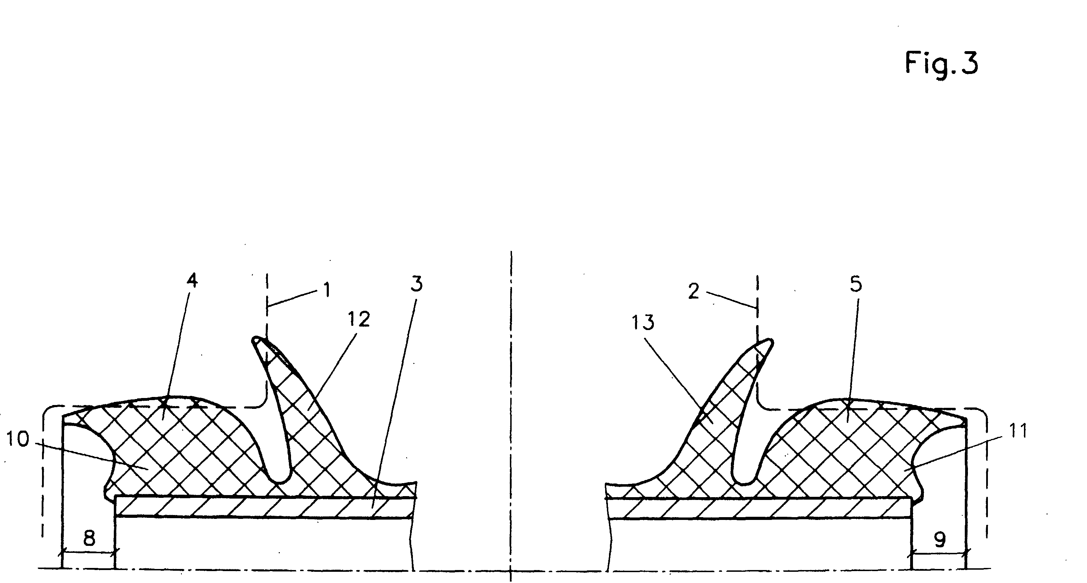

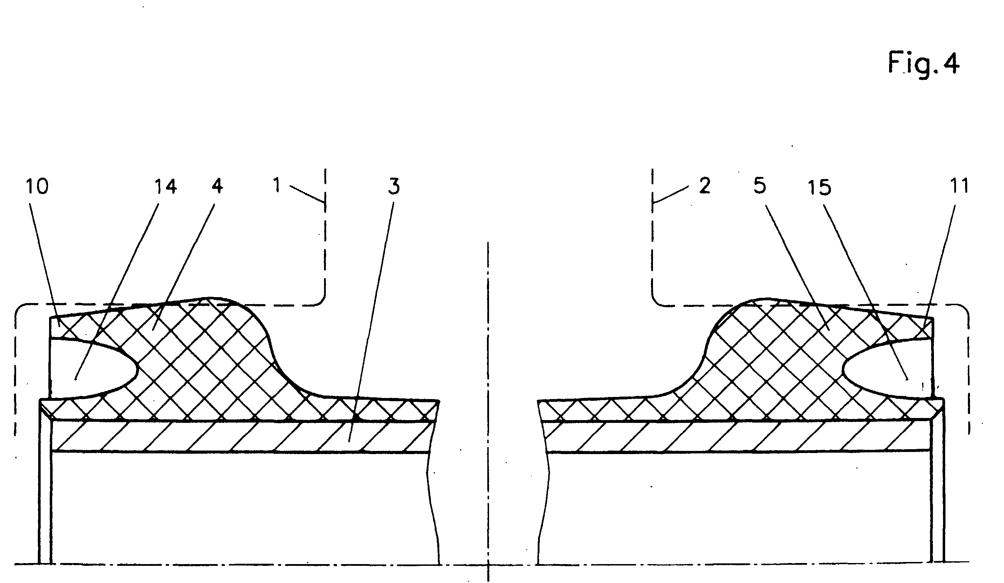

Die Ausführungsbeispiele aus den Figuren 3 und 4 sind im herstellungsbedingten Zustand gezeigt.

### Ausführung der Erfindung

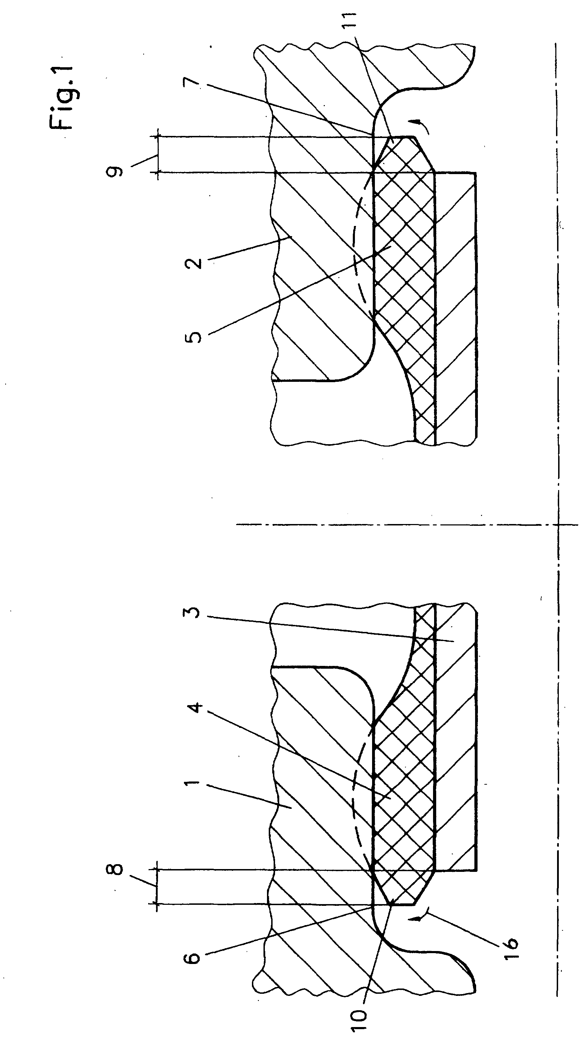

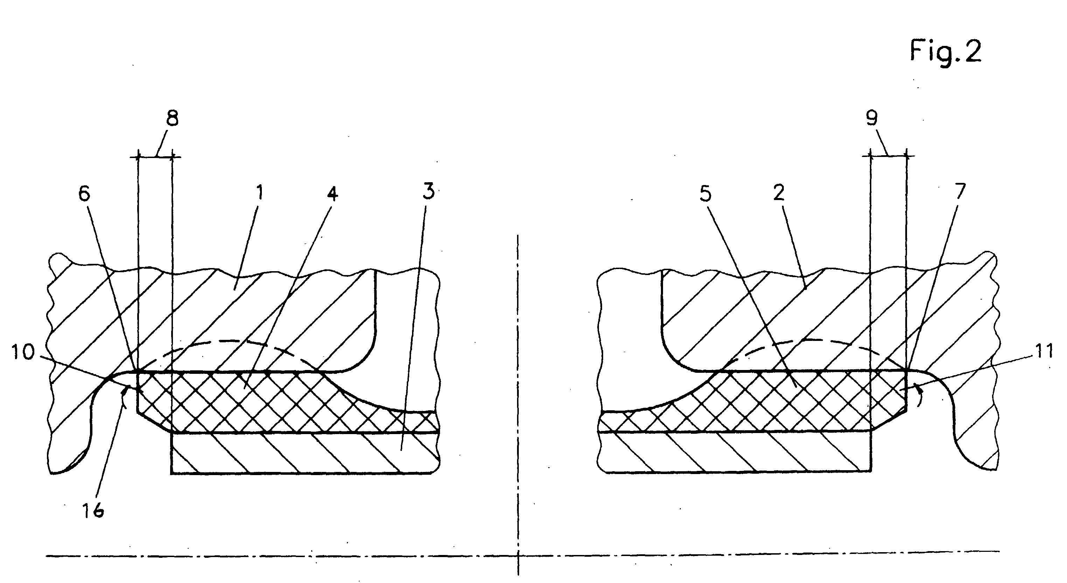

In den Figuren 1 und 2 ist ein Ausführungsbeispiel eines Steckstücks gezeigt, daß die rohrförmigen Hohlkörper 1, 2, die axial zueinander benachbart angeordnet sind, dichtend miteinander verbindet. Die beiden Hohlkörper 1, 2 bestehen beispielsweise aus einer Aluminiumlegierung und bilden den Teil einer Leitung, die sich vom Luftfilter eines Kraftfahrzeug-Motors zu dessen Turbolader erstreckt. Das Steckstück besteht aus einer metallischen Verbindungshülse 3, die umfangsseitig vom elastomeren Werkstoff, aus dem die Dichtringe 4, 5 bestehen, vollständig umschlossen ist. Dadurch wird die Verbindungshülse vor Korrosion geschützt und eine lange Gebrauchsdauer bei gleichbleibender mechanischer Stabilität garantiert.

Das Steckstück wird lediglich durch die elastische Vorspannung der Dichtringe 4, 5 innerhalb der Hohlkörper 1, 2 gehalten, wobei sich die Dichtringe 4, 5 umfangsseitig um die Stirnseiten der Verbindungshülse 3 erstrecken und in sich geschlossen ausgebildet sind. Der elastomere Werkstoff ist derart ausgewählt, daß seine Härte und Elastizität ausreicht, daß die Dichtlippen 10, 11, die durch die Überstände 8, 9 gebildet sind, bei Druckbeaufschlagung von beispielsweise mehr als 10 bar radial elastisch nach außen auffedern und sich dichtend an die Innenwand 6, 7 der jeweiligen Innenwand des Hohlkörpers 1, 2 anlegen.

In Figur 1 ist ein Ausführungsbeispiel gezeigt, bei dem der Druck im Inneren des Steckstücks beispielsweise von Atmosphärendruck bis etwa 10 bar Überdruck reicht. Beim Abdichten derartiger Drücke bewegen sich die Dichtlippen 10, 11 in radialer Richtung nicht und nur die Dichtringe 4, 5 dichtend mit ihrer kugelförmigen Dichtfläche an der Innenwand 6, 7 der Hohlkörper 1, 2 ab.

Wird demgegenüber der Druck im Inneren des Steckstücks, beispielsweise allmählich auf 60 bar Überdruck erhöht, bewegen sich die Dichtlippen 10, 11, wie durch den Pfeil 16 dargestellt, allmählich radial nach außen.

Ein derartiger Betriebszustand ist in Figur 2 gezeigt. Die Dichtlippen 10, 11 sind radial nach außen aufgefedert, wobei sich die gesamten Überstände 8, 9 an die Innenwände 6, 7 der Hohlkörper 1, 2 angelegt haben. Der in Figur 1 zu erkennende Umfangsspalt, der sich in radialer Richtung zwischen den Dichtlippen 10, 11 und den Innenwänden 6, 7 erstreckt, ist im Betriebszustand gemäß Figur 2 vollständig geschlossen. Hierauf ist die ausgezeichnete Dichtwirkung des Steckstücks bei Überdruckbeaufschlagung zurückzuführen.

In Figur 3 ist ein Ausführungsbeispiel eines Steckstücks gezeigt, daß sich von dem aus den Figuren 1 und 2 gezeigten Steckstück im wesentlichen dadurch unterscheidet, daß die Dichtringe 4, 5 auf den einander zugewandten Seiten jeweils eine Staublippe 12, 13 aufweisen, wobei die Staublippen 12, 13 jeweils an einem Radialvorsprung der Hohlkörper 1, 2 anlegbar sind. Die Hohlkörper 1, 2 sind in diesem Ausführungsbeispiel mit unterbrochener Linie angedeutet. Die Staublippen 12, 13 halten Verunreinigungen aus der Umgebung von den Dichtlippen 10, 11 fern. Eine gleichbleibend gute Abdichtung gegenüber den Hohlkörpern 1, 2 ist dadurch bedingt.

In Figur 4 ist der elastomere Werkstoff, aus dem die Dichtringe 4, 5 bestehen, stirnseitig jeweils mit einer nutförmigen Ausnehmung 14, 15 versehen. Die bei Druckbeaufschlagung an die Hohlkörper 1, 2 anlegbaren Dichtlippen 10, 11 bilden jeweils die außenumfangsseitige Begrenzung der Ausnehmungen 14, 15, wobei innerhalb der Ausnehmungen 14, 15 der gleiche Druck wie innerhalb des Steckstücks anliegt.

## Patentansprüche

1. Steckstück zur dichten Verbindung von zwei mit axialem Abstand zueinander benachbart angeordneten, rohrförmigen Hohlkörpern (1, 2), umfassend eine Verbindungshülse(3) aus zähhartem Werkstoff, die zumindest stirnseitig beiderseits von Dichtringen (4, 5) aus elastomerem Werkstoff umschlossen ist, wobei die Dichtringe (4, 5) an die Innenwand (6, 7) der jeweiligen Hohlkörper (1, 2) dichtend anlegbar sind und zumindest ein Dichtring (4, 5) die entsprechende Stirnseite der Verbindungshülse (3) in axialer Richtung mit einem Überstand (8, 9) überragt,
**dadurch gekennzeichnet, dass** der Überstand (8, 9) als in axialer Richtung sich im Querschnitt verjüngende Dichtlippe (10, 11) ausgebildet ist, die ohne Überdruckbeaufschlagung innerhalb des Steckstücks einen Umfangsspalt in radialer Richtung zu der Innenwand (6, 7) des Hohlkörpers (1,2) bildet und bei Überdruckbeaufschlagung innerhalb des Steckstücks dichtend an die die Stirnseite außenseitig umschließende Innenwand (6, 7) des Hohlkörpers (1, 2) gelegt ist.

2. Steckstück nach Anspruch 1, **dadurch gekennzeichnet, daß** die Dichtringe (4, 5) auf den einander zugewandten Seiten jeweils eine Staublippe (12, 13) aufweisen, die den jeweiligen Dichtlippen (10, 11) mit axialem Abstand benachbart zugeordnet sind.

3. Steckstück nach einem der Ansprüche 1 oder 2, **dadurch gekennzeichnet, daß** der Überstand (8, 9) eine stirnseitige, nutförmige Ausnehmung (14) aufweist.

4. Steckstück nach einem der Ansprüche 1 bis 3, **dadurch gekennzeichnet, daß** die Verbindungshülse (3) aus einem metallischen Werkstoff besteht.

5. Steckstück nach einem der Ansprüche 1 bis 4, **dadurch gekennzeichnet, daß** der elastomere Werkstoff die Verbindungshülse (3) außenseitig vollständig umschließt.

6. Steckstück nach einem der Ansprüche 1 bis 5, **dadurch gekennzeichnet, daß** der elastomere Werkstoff und die Verbindungshülse (3) adhäsiv verbunden sind.

7. Steckstück nach einem der Ansprüche 1 bis 6, **dadurch gekennzeichnet, daß** die Verbindungshülse (3) zylindrisch ausgebildet ist.

8. Steckstück nach einem der Ansprüche 1 bis 7, **dadurch gekennzeichnet, daß** beide Dichtringe (4, 5) axiale Überstände (8, 9) aufweisen und mit Dichtlippen (10, 11) versehen sind, die bei Überduckbeaufschlagung radial nach außen auffederbar sind.

9. Steckstück nach einem der Ansprüche 1 bis 8, **dadurch gekennzeichnet, daß** der Überdruck zur Betätigung der Dichtlippen (10, 11) 10 bar beträgt.

10. Steckstück nach einem der Ansprüche 1 bis 9, **dadurch gekennzeichnet, daß** im Gebrauch die Dichtringe (4, 5) unter elastischer Vorspannung dichtend von den Hohlkörpern (1, 2) umschlossen sind und daß das Steckstück unter Vermeidung sekundärer Befestigungsmittel in den Hohlkörpern (1, 2) stirnseitig aufgenommen ist.

## Claims

1. Coupling piece for tightly connecting two tubular hollow bodies (1, 2) arranged next to each other at an axial distance apart, comprising a connection sleeve (3) of hard and tough material, which is enclosed at least at the extreme ends on both sides by sealing rings (4, 5) of elastomeric material, the sealing rings (4, 5) being able to be placed in a sealing manner against the inner wall (6, 7) of the respective hollow bodies (1, 2) and at least one sealing ring (4, 5) protruding in the axial direction beyond the corresponding extreme end of the connection sleeve (3) with an overhang (8, 9), **characterized in that** the overhang (8, 9) is formed as a sealing lip (10, 11) which narrows in cross section in the axial direction, forms a peripheral groove in the radial direction in relation to the inner wall (6, 7) of the hollow body (1, 2) when positive pressure is not admitted to the coupling piece and is in sealing contact with the inner wall (6, 7) of the hollow body (1, 2), externally enclosing the extreme end, when positive pressure is admitted to the coupling piece.

2. Coupling piece according to Claim 1, **characterized in that** the sealing rings (4, 5) have on each of the mutually facing sides a dust lip (12, 13) which is arranged to be next to the respective sealing lips (10, 11) at an axial distance from them.

3. Coupling piece according to either of Claims 1 and 2, **characterized in that** the overhang (8, 9) has a groove-shaped recess (14) at the extreme end.

4. Coupling piece according to one of Claims 1 to 3, **characterized in that** the connection sleeve (3) consists of a metallic material.

5. Coupling piece according to one of Claims 1 to 4, **characterized in that** the elastomeric material externally encloses the connection sleeve (3) completely.

6. Coupling piece according to one of Claims 1 to 5, **characterized in that** the elastomeric material and the connection sleeve (3) are adhesively bonded.

7. Coupling piece according to one of Claims 1 to 6, **characterized in that** the connection sleeve (3) is cylindrically formed.

8. Coupling piece according to one of Claims 1 to 7, **characterized in that** both sealing rings (4, 5) have axial overhangs (8, 9) and are provided with sealing lips (10, 11) which can be made to spring outwards when positive pressure is admitted.

9. Coupling piece according to one of Claims 1 to 8, **characterized in that** the positive pressure for actuating the sealing lips (10, 11) is 10 bar.

10. Coupling piece according to one of Claims 1 to 9, **characterized in that**, in use, the sealing rings (4, 5) are enclosed under elastic prestress in a sealing manner by the hollow bodies (1, 2) and **in that** the coupling piece is accommodated in the hollow bodies (1, 2) at their extreme end while avoiding secondary fastening means.

## Revendications

1. Manchon de fixation pour relier de manière étanche deux corps (1, 2) creux et tubulaires agencés au voisinage et à distance axiale l'un de l'autre, qui comprend une douille de liaison (3) en matériau résistant qui, au moins sur ses deux côtés frontaux, est entourée par des anneaux d'étanchéité (4, 5) en matériau élastomère, les anneaux d'étanchéité (4, 5) pouvant être appliqués de manière étanche contre la paroi interne (6, 7) de chaque corps creux (1, 2) et au moins un anneau d'étanchéité (4, 5) débordant dans la direction axiale du côté frontal correspondant de la douille de liaison (3) sur un débord (8, 9), **caractérisé en ce que** le débord (8, 9) est configuré sous la forme d'une lèvre d'étanchéité (10, 11) dont la section transversale se rétrécit dans la direction axiale et qui, quand elle n'est pas sollicitée par une surpression dans le manchon de fixation, forme dans la direction radiale un interstice périphérique avec la paroi interne (6, 7) du corps creux (1, 2) et qui, quand elle est sollicitée par une surpression dans le manchon de fixation, est appliquée de façon étanche contre la paroi interne (6, 7) du corps creux (1, 2), qui entoure l'extérieur du côté frontal.

2. Manchon de fixation selon la revendication 1, **caractérisé en ce que** les côtés orientés l'un vers l'autre des anneaux d'étanchéité (4, 5) présentent chacun une lèvre anti-poussière (12, 13) associée à la lèvre d'étanchéité (10, 11) respective au voisinage de laquelle elle est agencée et à distance axiale de cette lèvre d'étanchéité.

3. Manchon de fixation selon l'une des revendications 1 ou 2, **caractérisé en ce que** le côté frontal du débord (8, 9) présente un évidement (14) en forme de rainure.

4. Manchon de fixation selon l'une des revendications 1 à 3, **caractérisé en ce que** la douille de liaison (3) est constituée d'un matériau métallique.

5. Manchon de fixation selon l'une des revendications 1 à 4, **caractérisé en ce que** le matériau élastomère entoure complètement l'extérieur de la douille de liaison (3).

6. Manchon de fixation selon l'une des revendications 1 à 5, **caractérisé en ce que** le matériau élastomère et la douille de liaison (3) sont reliés par adhérence.

7. Manchon de fixation selon l'une des revendications 1 à 6, **caractérisé en ce que** la douille de liaison (3) a une configuration cylindrique.

8. Manchon de fixation selon l'une des revendications 1 à 7, **caractérisé en ce que** les deux anneaux d'étanchéité (4, 5) présentent des débords axiaux (8, 9) et sont munis de lèvres d'étanchéité (10, 11) qui peuvent être déformées élastiquement axialement vers l'extérieur en cas de sollicitation de surpression.

9. Manchon de fixation selon l'une des revendications 1 à 8, **caractérisé en ce que** la surpression d'actionnement des lèvres d'étanchéité (10, 11) est de 10 bars.

10. Manchon de fixation selon l'une des revendications 1 à 9, **caractérisé en ce qu'**en cours d'utilisation, les anneaux d'étanchéité (4, 5) sont entourés de manière étanche et sous précontrainte élastique par les corps creux (1, 2) et **en ce que** le manchon de fixation est reçu dans les corps creux (1, 2) sans recours à des moyens secondaires de fixation.
